# EUROPEAN PATENT APPLICATION

(11) **EP 0 587 318 A2**
(43) Date of publication of application: **16.03.1994**
(21) Application number: 93306423.0
(22) Date of filing: 13.08.1993
(51) Int. Cl.: G06F 11/00, G06F 11/20, G06F 11/22

(54) **Method of operating a distributed processor arrangement**

(30) Priority: 05.09.1992 GB 9218863
(71) Applicant: GEC-MARCONI LIMITED, Stanmore, Middlesex HA7 4LY (GB)
(72) Inventor: Coombs, Timothy Arthur, St Albans, Herts AL4 0UX (GB)
(74) Representative: Hoste, Colin Francis

(57) **Abstract**

A method of operating a distributed processor arrangement in which the overall data processing task is divided into a plurality of separate data processing tasks carried out by separate processor units employs test data packages associated with and processed together with the real data. The processor units are informed what test data package values they should receive and if the actual test data package values do not agree with this the system knows that there has been an error in an earlier data processing task.

## Description

This invention relates to a method of operating a distributed processor arrangement.

In many applications requiring large amounts of data processing or a very high level of reliability it is advantageous to use a distributed processor system. That is instead of a single large processor able to carry out the entire data processing task a number of smaller processors are each used to carry out a part of the task.

This is often advantageous because it is often cheaper to produce a distributed processing system than a single large monolithic processor. More importantly a distributed processing system can be made more reliable than a single monolithic processor by providing a number of redundant processors so that if a processor fails it can be excluded from the system and its workload transferred to another processor or processors.

In order to check the operation of the individual processors in a distributed system so that a failed processor can be identified and its output rejected two main techniques are known.

The first is to carry out each data processing task independently on three separate processors and compare the results, if one processor gives a different result to the other two it is faulty and its output is ignored thereafter. This procedure gives a very high level of reliability compared to a single monolithic processor which could develop a fault and start producing incorrect data without this being detected but requires a very large number of redundant processors required to carry out all data processing tasks three times, making this a very costly option and increasing the size and weight of the final data processing system. This technique and any other which relies on carrying out a task several times and comparing the results has the problem that a failure of the comparator comparing the three sets of results could cause the results to be passed as being identical and correct when they are not and so lead to incorrect results being passed on to and used by further processing stages.

The second technique, which is often used in conjunction with the first, is to run tests on the processors between data processing tasks. This suffers from the problem that the fact that a processor is able to correctly execute a test does not guarantee that it will correctly carry out a real data processing task and also from the problem that some data processing tasks, such as radar tracking, require continuous processing of the incoming data and the need to temporarily halt the real data processing task to run tests can severely reduce the effectiveness of the real data processing task, in the case of radar tracking for example any interruption can result in targets being lost.

A further problem with both of these techniques is that they will not be able to detect errors due to software faults. The first technique of carrying out the same task in several different processors and comparing the results cannot deal with software errors because these will cause all of the processors to produce the same incorrect result. The second technique of running tests also cannot detect software induced errors because the test software will not be the same as the software used to carry out real data processing tasks.

This invention was intended to provide a method of operating a distributed processor arrangement at least partially overcoming these problems.

This invention provides a method of operating a distributed processor arrangement in which, a plurality of separate data processing units carry out data processing tasks sequentially on the same block of data, characterised in that each block of data has an associated test data package processed identically to the block of data, each data processing unit is informed what the value of the received test data package is predicted to be before it carries out its data processing task on it and the data processing unit reports that the data processing unit which last processed the data is faulty if this predicted value of the test data package does not agree with the actual value of the test data package.

This allows the operation of the processor arrangement to be checked without interrupting its processing of real data. Even if errors are missed due to faulty comparators in one data processing unit or errors are caused by software faults these errors will be picked up by the next data processing unit to operate on the data because the test data package as well as the real data block will be corrupted and the predicted and actual data package values will not agree.

Apparatus embodying the invention will now be described by way of example only with reference to the accompanying diagrammatic Figure in which;

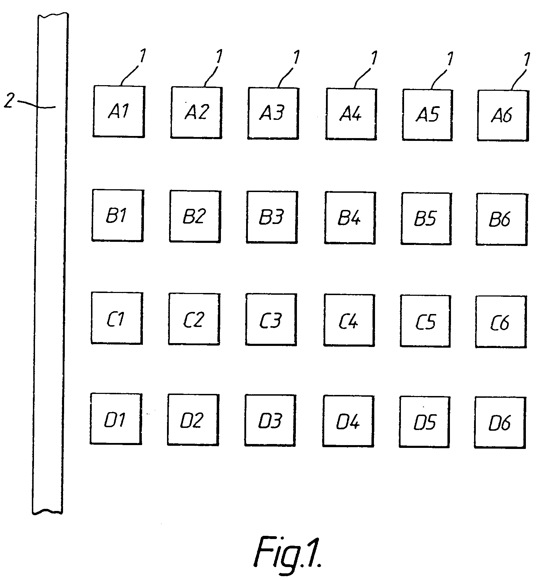

Figure 1 shows a part of a distributed processor employing the invention.

Referring to Figure 1 a portion of a distributed data processing system is shown. This comprises 24 individual discrete data processing units 1 linked to a data bus 2.

The processing units 1 are formed into four Rows, designated A to D, and 6 columns or processing levels designated 1 to 6.

The processing units 1 and data bus 2 are linked to allow data transfer between the units 1 and bus 2.

In operation data processing tasks are supplied along the bus 2 and idle processing units 1 accept the tasks and carry them out. For example a task is accepted and carried out by the data processing unit A1. Unit A1 then passes its results along its row to unit A2 which carries out the same task and compares its own results with those produced by unit A1.

If the two sets of results are identical it is assumed that they are correct and the unit A2 passes the results back to the bus 2 for use in further processing stages and takes no further action. Although it is theoretically possible for both units A1 and A2 to simultaneously develop the same fault and so produce identical incorrect results this is so unlikely that the possibility is ignored in present distributed processors using the technique of carrying out all data processing tasks three times.

If the two sets of results are different the unit A2 passes both the sets of results to a unit B2 in the next row which repeats the task again and compares its results with those produced by the units A1 and A2.

If the results from unit B2 are identical to those produced by one of the units A1 and A2 the unit which is not producing identical results is taken to be faulty and instructed by unit B2 to remove itself from the system by not accepting any more data processing tasks.

If none of the results from the three units A1, A2 and B2 are identical the results are passed to a further unit B3 which again repeats the task and compares its own results with those of the units A1, A2 and B2. This process of task repetition and result comparison continues until two units produce identical results whereupon all units producing differing results are taken to be faulty and removed from the system.

In a further refinement of the system, where the first unit, in the above example A1, is carrying out a data processing task on a quantity of data the second unit, in the above example A2, carries out the same data processing task on only a representative subset of the data and compares the results derived from the subset of the data only by the two units.

This will reduce the amount of processing required for the checking function, allowing the system to carry out more tasks.

Where the first two units do not agree the third, and any subsequent, units can either process all of the initial quantity of data or just the said subset. If only the subset is processed and the first unit is found to be faulty it will be necessary to repeat the task on the entire quantity of data in order to provide a correct result of the data processing task, and the result of this repetition will itself have to be carried out on two units 1 to allow checking.

The allocation of tasks to the processing units 1 is carried out by a central control unit (not shown) which supplies details of outstanding data processing tasks along the bus 2. In response to these details those processing units 1 able to carry out the tasks identify themselves, along the bus 2, to the control unit which then allocates the tasks to the units.

It would of course be possible to pass the results from two units on to a third unit for comparison, but this introduces the possibility of any miss-match being due to a fault in the third unit or the communications link to the third unit, as a result this option is not preferred.

As explained above it is theoretically possible for two units to simultaneously fail so as to produce identical incorrect results, although this is very unlikely. If this remote risk is considered unacceptable it can be eliminated by operating the system such that each task is carried out initially by three units and all three must produce identical results before the results are accepted as correct. In general the procedure can be expressed as n units initially carrying out the task separately and the results from n units being required to be identical before the results are assumed correct, where n is an integer greater than 1.

In a further refinement of the system, when a unit is assumed to be faulty because it produces differing results to other units, instead of immediately removing the unit from the system the unit can be allowed to carry out the same data processing task again and its new results compared with those of the other units and it will then be removed from the system only if it again produces differing results to the other units. The advantage of this procedure is that where a processing unit suffers a transient fault or where the transmission of data between the processor unit to allow comparison has suffered a transient fault resulting in the transferred data being corrupted the processing unit will remain in service after the transient fault has disappeared and only units having suffered a permanent fault will be removed from service. The obvious advantage of this procedure is that units are not removed from the system unnecessarily and the system will retain its multiple redundancy and fault tolerance for longer than in the basic system where at least some of the units removed from the system will have recovered from transient faults and will in fact be fully functional. The main source of such transient errors is in data transmission which is vulnerable to any form of interference which can produce transient corruption of data in transmission such as electro-magnetic interference, since such faults are by their very nature transient and self correcting it is useful for the system to keep units in service despite having suffered them. Even if the unit is retained in service after suffering a transient fault the data containing the transient fault will of course be ignored and not used for further processing.

A multiply redundant system of the type described can cope with most possible hardware failures but there are two possible source of errors which it cannot detect.

The first is a failure in a checking unit comparing its own results with those of other units where the failure causes a checking unit to signal that the results are the same when they are in fact different. In this case data containing errors could be used for data processing and a faulty processing unit could remain in service.

Although an error of this type is only significant if it occurs at the same time as another error it is not necessary for the two errors to be the same so the probability of such a double failure is significant, particularly because if the error in the checking unit affected only its comparison functions this error could exist for some time without producing any adverse effects and only become significant and detectable when another error in the same or another unit caused this faulty comparison function to conclude that two dissimilar sets of data were the same.

The second source of errors which such a system cannot detect is software errors which will generally cause all units carrying out the same processing task to come to the same incorrect answer, as a result of all of the answers being the same it is not possible to detect such errors by comparing the outputs of a plurality of processing units.

It should be understood that these are not special weaknesses of this system but are weaknesses shared by all systems which carry out a processing task several times and compare results in order to detect errors.

In order to allow errors from these two sources to be detected in systems of the type described above or other types of processing system test data packages can be used.

In a distributed data processor an overall data processing task is broken down into a number of smaller data processing tasks each of which is one of the data processing tasks referred to above, and each of these data processing tasks has a test data package attached to it.

Each test data package is a relatively small amount of data compared to the amount of data in the real processing task it is attached to and could be as little as one bit, although generally a larger amount of test data is required. The test data packages are processed identically to the data contained in the data processing tasks they are attached to.

In order to use the test data packages to detect errors each processing unit must be informed what the test data packet attached to the processing task it has received should be, each processing unit should then signal that there has been an error at an earlier stage of processing if the actual test data package does not agree with this predicted value.

In order for this to be done, after the overall data processing task has been broken down into a sequence of data processing tasks a starting test data package at the beginning of these data processing tasks must be selected and the value of this test data package after each of the data processing tasks in the sequence has been applied to it in series must be calculated. This expected value of the test data package must then also be attached to each of the data processing tasks so that the data processing units can compare the actual test data package values with the expected test data package values.In general each data processing task will comprise two parts, the first being the process to be carried out and the second being the data to be processed, known as a block of data. The expected test data package value will be attached to the first part of the data processing task while the test data package itself will be attached to, and processed with, the block of data.

If preferred it would of course be possible to have the central control unit supply the expected test data package values to the data processing units in some other way.

An example of the use of test data packages will now be described with reference to Figure 1. Suppose that the distributed processing array of Figure 1 is intended to carry out the overall data processing task of multiply by two then add two and then divide by 4 and that this overall task has been split up into three separate data processing tasks, the first being multiply by 2, the second being add 2 and the third being divide by 4. These three data processing tasks have been allocated to processing units A1, B1 and C1 respectively with the tasks being simultaneously carried out and the results compared by processing units A2, B2 and C2 respectively. Each of the data processing units will carry out its assigned data processing task on whatever block of data is supplied to it and also carry out this function on the attached test data package.

If the initial value of the test data package is 2 we know that after adding 2 the test data package value should be 4 and that after a further multiplication by 2 the test data packet value should be 8 and that after dividing this by 4 the test data packet value should be 2. Accordingly the first data processing task informs the data processing units A1 and A2 that they should receive a test data packet value of 2, the second data processing task informs the processing units B1 and B2 that the value of the test data package they receive should be 4 and the third data processing task informs the data processing units C1 and C2 that the value of the test data package they receive should be 8 and finally informs a fourth data processing unit D1 is informed that the value of the test data package it receives should be 2. Although not otherwise required for this data processing operation the processing unit D1 is used to check that the final value of the test data package is correct.

Provided that all of the data processing units are operating correctly all of the data processing units will find that their actual and expected test data package values agree and there will be no problems.

It should be noted that the test data package value is independent of the values of the block of data it is associated with.

Dealing first with the example of error in a single data processing unit, let us suppose that the unit A1 instead of adding 2 adds 3 and that data processing unit A2 suffers a failure in its comparator unit such that it believes that the data being produced by itself and the data processing unit A1 are the same and as a result it accepts the data from the unit A1 as correct and passes it on to the data processing unit B1. In this case the data processing unit B1 will immediately notice that its received test data package value of 5 is different from the expected test data package value of 4 and will assume that both units A1 and A2 are faulty and will inform the central control unit (CCU) of this fact, tell the CCU which data processing task processor B1 is carrying out and what test data package value it was expecting.

If the test data package value that the data processing unit B1 is expecting is the correct one for its data processing task then both of the units A1 and A2 will be assumed to be faulty and be taken out of the system. Alternatively, if the data processing unit B1 is expecting the wrong test data package value it will be assumed to be faulty and will be removed from the system.

It is theoretically possible that the unit processing unit B1 could be supplied with an incorrect test data package value, in this example 5 for instance, and that this incorrect expected test data package value could be, by coincidence, identical with an incorrect test data package value generated by the data processing units A1 and A2. This is an extraordinarily unlikely situation since it requires three separate failures, albeit not identical ones, to occur simultaneously but it will still be detected at the next stage in the data processing task. This is because when the data processing units B1 and B2 multiply the incorrect test package value of 5 by 2 to obtain the answer 10, although they will both produce the same answer and thus accept it themselves the data processor C1 will notice that the received test data package value 10 is different from the expected test data package value 8 and will assume that the processors B1 and B2 are faulty and inform the CCU accordingly.

Where there is a software error in the data processing task which will cause any data processing unit carrying it out to produce the same wrong answer this will be detected because the test data package value will be incorrect. For example, where a data processing task carried out by the processing units A1 and A2 contains a software error and as a result they add 4 instead of 2 they will produce identical answers and as a result the data processing unit A2 will pass their results on to the data processing units B1 and B2 for further processing. However the data processing unit B1 will immediately notice that the expected test data package value is 4 and the received test data package value is 6 and that the data processing units A1 and A2 are faulty. This fault will of course prove impossible to eradicate because it is in the software and every data processing unit set this data task will produce the same wrong answer, in this case when a set number of data processing units, for example 8, have produced the same wrong answer the CCU will recognise that this is not due to faults in the units but is due to a fault in the software and will signal the fact that there is software fault to the user since it is not practical for the processor to attempt to amend its own software.

Where data processing units are to be removed from the system because they are judged to be faulty because they have produced incorrect test data package values they can be retested before being removed from the system as described above for hardware faults.

Although the use of test data packages has been described with reference to one specific distributed data processing system it could be used in any distributed data processing system in which data is operated on sequentially by a plurality of data processing units.

Operation of the distributed data processing system has been described as involving the use of a central control unit (CCU) this is not essential, control functions could be carried out by the distributed data processing units themselves.

## Claims

1. A method of operating a distributed processor arrangement in which, a plurality of separate data processing units carry out data processing tasks sequentially on the same block of data, characterised in that each block of data has an associated test data package processed identically to the block of data, each data processing unit is informed what the value of the received test data package is predicted to be before it carries out its data processing task on it and the data processing unit reports that the data processing unit which last processed the data is faulty if this predicted value of the test data package does not agree with the actual value of the test data package.

2. A method as claimed in Claim 1 in which each data processing task is carried out by a plurality of separate data processing units simultaneously and their results are compared.

3. A method as claimed in Claim 1 or Claim 2 in which each data processing task includes the expected test data package value associated with that task.
